# EUROPEAN PATENT APPLICATION

(11) **EP 2 214 349 A1**
(43) Date of publication of application: **04.08.2010**
(21) Application number: 08843426.1
(22) Date of filing: 30.10.2008
(51) Int. Cl.: H04L 12/28, H04L 12/44, H04L 12/56

(54) **RELAY DEVICE AND METHOD, AND PROGRAM**

(30) Priority: 30.10.2007 JP 2007282199
(71) Applicant: Sony Corporation, Tokyo 108-0075 (JP)
(72) Inventor: SHIGEI, Hiroyuki, Tokyo 108-0075 (JP)
(74) Representative: Körber, Martin Hans
(86) International application number: PCT/JP2008/069709
(87) International publication number: WO 2009/057670

(57) **Abstract**

The present invention relates to a relay device, a relay method, and a program that can suppress occurrence of congestion of packets.

In a case where a reception control unit 141 receives multicast packets through ports 132-1 through 132-n, the reception control unit 141 stores the received multicast packets in a buffer 144. A reception-band measurement unit 143 measures the reception band of a stream of multicast packets passing through a channel from the reception control unit 141 to the buffer 144 in unit time and sends a notification of a measured value to a transmission control unit 146 every unit time. The transmission control unit 146 performs control so as not to transmit the multicast packets stored in the buffer 144 from a port or ports 132 whose transmission band is lower than a transmission threshold value corresponding to the reception band. The present invention may be applied to, for example, a Layer 2 switch.

## Description

### Technical Field

The present invention relates to a relay device, a relay method, and a program. The present invention relates more particularly to a relay device, a relay method, and a program that suppress congestion of packets.

### Background Art

These days, backbones of IP (Internet Protocol) networks have been complying with multicast-packet specifications, whereby multicast packets are delivered through home networks. In particular, in a service such as IPTV (Internet Protocol TV), multicast packets may be delivered through home networks at 20 Mbps (Bits Per Second) or higher.

However, many of existing standard Layer 2 switches (switching hubs) used in home networks, which are Layer 2 (L2, Data Link Layer) networks, do not sufficiently comply with multicast specifications, whereby multicast packets are processed similarly to broadcast packets.

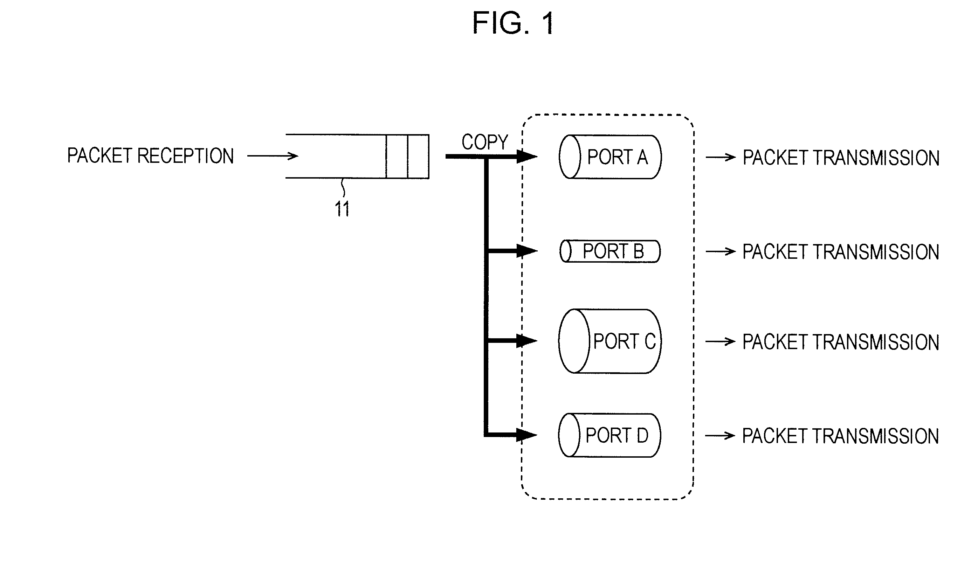

For example, in an existing standard Layer 2 switch that does not sufficiently comply with multicast specifications, as shown in Fig. 1, a received multicast packet is stored in a buffer 11. Thereafter, copies of the multicast packet are made, the number of copies being as many as the number of ports A through D to which other devices are connected. The copies of the multicast packet are transmitted from the ports A through D. Then, after the copies of the multicast packet are transmitted from all the ports A through D, the multicast packet whose copies have been transmitted is deleted from the buffer 11. Processing for transmitting the next packet stored in the buffer 11 is performed.

Thus, even when there is no terminal device belonging to a multicast group within networks connected to individual ports, a multicast packet is transferred in a predetermined band from the individual ports. Thus, for example, in a case where the port B is connected to a network having a lower transfer speed than networks connected to the other ports, the port B becomes a bottleneck when a multicast packet is transmitted, whereby congestion of packets, packet loss, and the like may occur within the Layer 2 switch. For example, in a case where the transmission band of the port B is narrower than the reception band of a stream of multicast packets, even when the ports other than the port B have an available section within the transmission band, a phenomenon occurs in which buffer leak occurs at the buffer 11, packet loss occurs, and only a multicast packet that is successfully transmitted from the port B is transmitted from the other ports A, C, and D.

There is a possibility that this phenomenon occurs even in Layer 2 switches having an IGMP (Internet Group Management Protocol) snooping function in a case where there is a terminal device belonging to a multicast group in a network whose transfer speed is low.

Thus, it has been previously proposed that a congestion state in a forward connection is detected using a Resource Management cell (RM cell) and a transmission rate is controlled in a multicast connection control device in an ATM (Asynchronous Transfer Mode) network (for example, see Patent Document 1).

Patent Document 1: Japanese Unexamined Patent Application Publication No. 9-312655

### Disclosure of Invention

### Technical Problem

However, the invention described in Patent Document 1 relates to a remedy to be applied after occurrence of congestion of packets. Thus, using this remedy, it is difficult to prevent the congestion of packets from occurring.

The present invention has been made in light of such circumstances, and an object thereof is to be able to suppress the occurrence of congestion of packets.

### Technical Solution

A relay device which is an aspect of the present invention is a relay device that relays a packet, the relay device including: measurement means for measuring a reception band of a stream of received packets; and transmission control means for controlling transmission of packets so as not to transmit the received packets from a port whose transmission band is lower than a threshold value corresponding to the reception band in a case where the received packets are multicast packets.

Classification means for classifying the received packets into multicast packets and packets which are not multicast packets may further be included, and the measurement means may be caused to measure only the reception band of a stream of multicast packets.

The relay device may be caused to relay a packet on the basis of a Layer 2 protocol.

A relay method or a program which is an aspect of the present invention is a relay method for a relay device that relays a packet or a program for causing a computer to execute relay processing for relaying a packet, the relay method or program including the steps of: measuring a reception band of a stream of received packets; and controlling transmission of packets so as not to transmit the received packets from a port whose transmission band is lower than a threshold value corresponding to the reception band in a case where the received packets are multicast packets.

According to an aspect of the present invention, the reception band of a stream of received packets is measured, and, in a case where the received packets are multicast packets, transmission of packets is controlled so as not to transmit the received packets from a port whose transmission band is lower than a threshold value corresponding to the reception band.

### Advantageous Effects

According to an aspect of the present invention, in accordance with the reception band of a stream of received packets, transmission of multicast packets is controlled. In particular, according to an aspect of the present invention, the occurrence of congestion of packets is suppressed.

### Brief Description of Drawings

[Fig. 1] Fig. 1 is a diagram for describing an example of existing multicast-packet relay processing.
[Fig. 2] Fig. 2 is a block diagram showing an embodiment of a network system to which the present invention is applied.
[Fig. 3] Fig. 3 is a block diagram showing a functional structure of a Layer 2 communication unit that realizes a communication function of Layer 2.
[Fig. 4] Fig. 4 is a flowchart for describing packet relay processing.
[Fig. 5] Fig. 5 is a diagram for describing an example of multicast-packet relay processing according to the present invention.
[Fig. 6] Fig. 6 is a diagram showing an exemplary structure of a computer.

### Explanation of Reference Numerals

101 network system, 111 broadband router, 112 Layer 2 switch, 113 terminal device, 131 Layer 2 communication unit, 132 port, 141 reception control unit, 142 buffer, 143 reception-band measurement unit, 144 buffer, 145 transmission-band detection unit, 146 transmission control unit

### Best Modes for Carrying Out the Invention

In the following, embodiments to which the present invention is applied will be described with reference to the drawings.

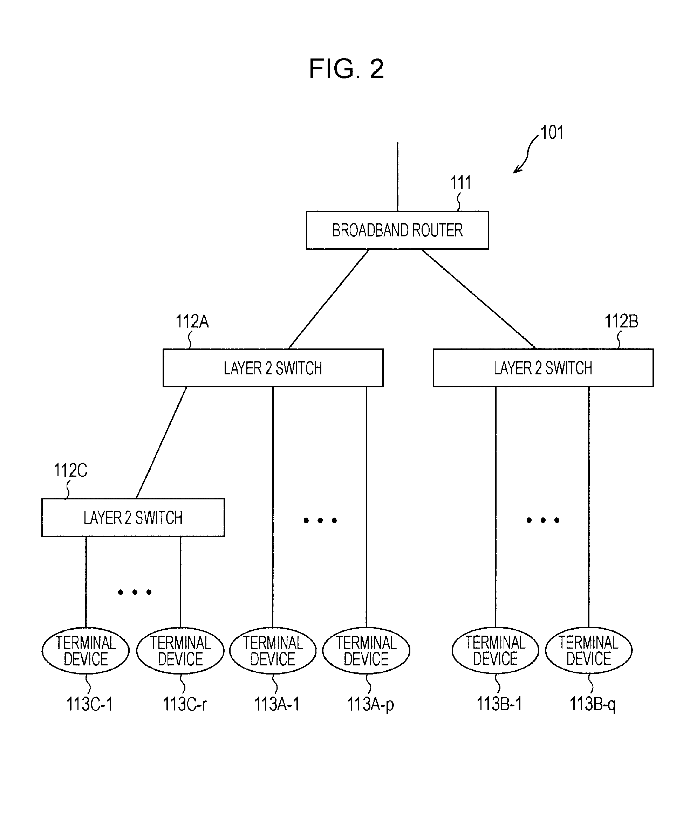

Fig. 2 is a block diagram showing an embodiment of a network system to which the present invention is applied. A network system 101 in Fig. 2 is, for example, a general home network system. The network system 101 includes a broadband router 111 that performs connection to an external network such as the Internet or a carrier network (for example, a CDN (Content Delivery Network) or the like) and that relays packets on the basis of at least Layer 2 and layer 3 (L3, Network Layer) protocols, Layer 2 switches 112A through 112C that are relay devices for relaying packets on the basis of at least a Layer 2 protocol, and terminal devices 113A-1 through 113A-p, 113B-1 through 113B-q, and 113C-1 through 113C-r that are network-ready devices such as information processing devices, AV (Audio/Visual) devices, and home electric appliances. The network system 101 constitutes a Layer 2 network.

The broadband router 111 is connected to an external network as described above, and is also connected to the Layer 2 switches 112A and 112B. The Layer 2 switch 112A is connected to the Layer 2 switch 112C and the terminal devices 113A-1 through 113A-p. The Layer 2 switch 112B is connected to the terminal devices 113B-1 through 113B-q. The Layer 2 switch 112C is connected to the 113C-1 through 113C-r.

Here, in the following, in a case where the Layer 2 switches 112A through 112C do not need to be distinguished from each other, they are simply referred to as Layer 2 switches 112. Moreover, in the following, in a case where the terminal devices 113A-1 through 113C-r do not need to be distinguished from each other, they are simply referred to as terminal devices 113.

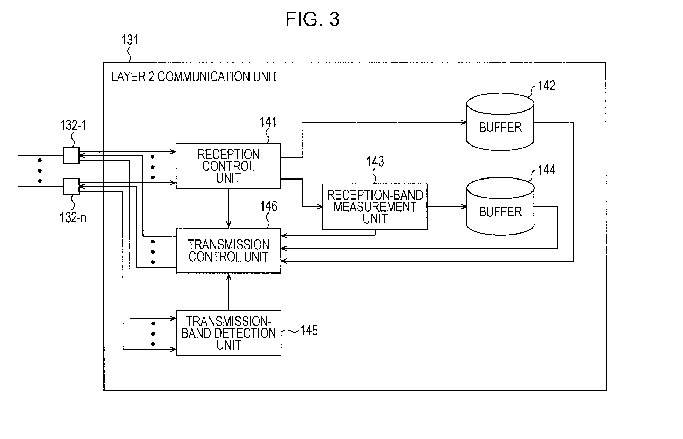

Fig. 3 is a block diagram showing a functional structure of a Layer 2 communication unit which is a unit that realizes a communication function of the broadband router 111 and Layer 2 switches 112 on the basis of a Layer 2 protocol. A Layer 2 communication unit 131 in Fig. 3 includes a reception control unit 141, a buffer 142, a reception-band measurement unit 143, a buffer 144, a transmission-band detection unit 145, and a transmission control unit 146.

The reception control unit 141 refers to a destination MAC (Media Access Control) address of a packet received from the outside through one of ports 132-1 through 132-n. In a case where the destination MAC address is a unicast address or a broadcast address, the packet is stored in the buffer 142. In a case where the destination MAC address is a multicast address, the packet is stored in the buffer 144 via the reception-band measurement unit 143. That is, the reception control unit 141 classifies the packet as a multicast packet or a packet which is not a multicast packet and stores the packet in a corresponding one of the buffers. Moreover, the reception control unit 141 sends notification of one of the ports 132-1 through 132-n from which the packet has been received and a source MAC address of the received packet, to the transmission control unit 146.

Here, in the following, in a case where the ports 132-1 through 132-n do not need to be distinguished from each other, they are simply referred to as ports 132.

As described above, a unicast packet whose destination MAC address is a unicast address or a broadcast packet whose destination MAC address is a broadcast address is stored in the buffer 142.

The reception-band measurement unit 143 includes, for example, a packet counter and the like. The reception-band measurement unit 143 measures the reception band of a stream of multicast packets passing through a channel from the reception control unit 141 to the buffer 144 in unit time and sends a notification of a measured value to the transmission control unit 146 every unit time.

As described above, a multicast packet whose destination MAC address is a multicast address is stored in the buffer 144.

The transmission-band detection unit 145 detects the transmission band of each of the ports 132 and sends a notification of a detected result to the transmission control unit 146. Here, an exemplary method for detecting the transmission band of each of the ports 132 will be described below.

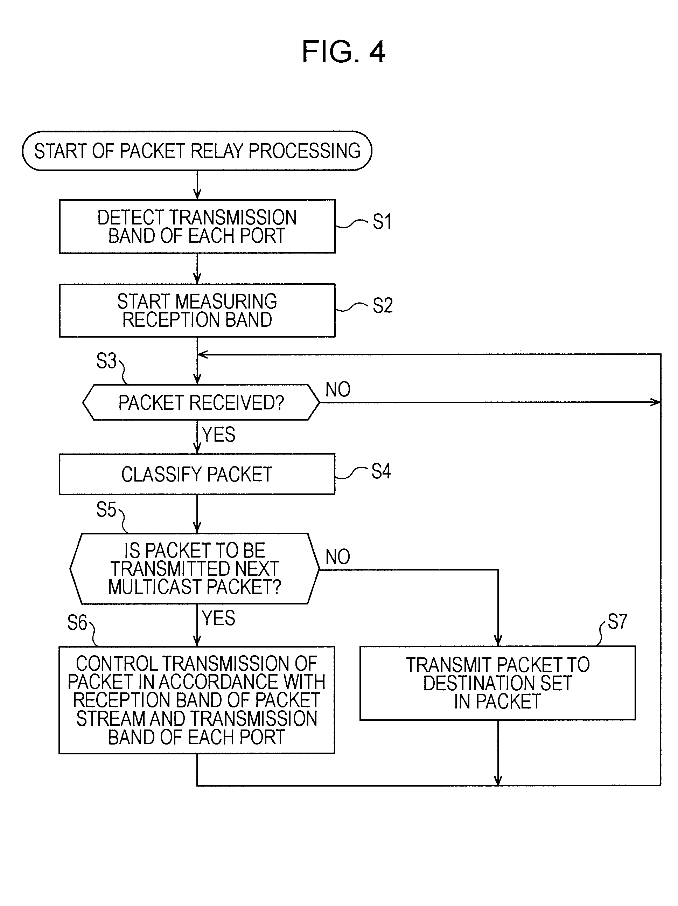

The transmission control unit 146 controls transmission of packets stored in the buffers 142 and 144 from each of the ports 132, as described below with reference to Fig. 4. Moreover, the transmission control unit 146 learns the MAC address of each terminal device 113 directly connected to a corresponding one of the ports 132 or indirectly connected to a corresponding one of the ports 132 via another Layer 2 switch 112 or the like, and updates an address table representing a correspondence relationship between each of the ports 132 and the MAC address of each terminal device 113 directly or indirectly connected to the port 132.

Next, packet relay processing performed by the broadband router 111 or the Layer 2 switches 112 will be described with reference to a flowchart of Fig. 4.

In step S1, the transmission-band detection unit 145 detects the transmission band of each of the ports 132. For example, the transmission-band detection unit 145 detects a physical frequency band of each cable connected to a corresponding one of the ports 132 as the transmission band of the port 132. For example, the transmission band of a port 132 to which a cable based on 10Base-T standards is connected is detected as 10 Mbps, and the transmission band of a port 132 to which a cable based on 100Base-TX standards is connected is detected as 100 Mbps.

Moreover, for example, the transmission-band detection unit 145 detects a constraint value (for example, a shaper value or the like) of the bandwidth of each of the ports 132 as the transmission band of the port 132, the constraint value being set using a QoS (Quality of Service) function.

The transmission-band detection unit 145 sends a notification of the detected value of the transmission band of each of the ports 132 to the transmission control unit 146.

In step S2, the reception-band measurement unit 143 starts measuring a reception band. More specifically, the reception-band measurement unit 143 starts processing for measuring the reception band of a stream of multicast packets passing through the channel from the reception control unit 141 to the buffer 144 in unit time and sending a notification of a measured value to the transmission control unit 146 every unit time.

In step S3, the reception control unit 141 determines whether a packet has been received. If the reception control unit 141 determines that a packet has been received, the procedure proceeds to step S4.

In step S4, the reception control unit 141 classifies the packet. More specifically, in a case where a unicast address or a broadcast address is set to the destination MAC address of the received packet, the reception control unit 141 stores the received packet in the buffer 142. In a case where a multicast address is set to the destination MAC address, the reception control unit 141 stores the received packet in the buffer 144.

Moreover, the reception control unit 141 sends a notification of the port 132 from which the packet is received and the source MAC address of the received packet to the transmission control unit 146. The transmission control unit 146 learns the MAC address of each terminal device 113 directly or indirectly connected to a corresponding one of the ports 132 in accordance with the information sent as notification, and updates the address table.

In step S5, the transmission control unit 146 determines whether a packet to be transmitted next is a multicast packet. If the transmission control unit 146 determines that the packet to be transmitted next in a stored order of packets that are stored in the buffers 142 and 144 is a multicast packet, the procedure proceeds to step S6.

In step S6, the transmission control unit 146 controls transmission of a packet in accordance with the reception band of a stream of packets and the transmission band of each of the ports 132. More specifically, for example, in a case where the transmission control unit 146 has an IGMP (Internet Group Management Protocol) snooping function or the like and can specify ports 132 to which terminal devices 113 requesting reception of a multicast packet to be transmitted next are connected, the transmission control unit 146 selects, from among the ports 132, a port or ports 132 whose transmission band is higher than or equal to a threshold value corresponding to the reception band measured by the reception-band measurement unit 143 (hereinafter also referred to as a transmission threshold value), as a port or ports from which the packet is transmitted.

Moreover, for example, in a case where the transmission control unit 146 does not have the IGMP snooping function or the like and cannot specify ports 132 to which terminal devices 113 requesting reception of a multicast packet to be transmitted next are connected, that is, in a case where a multicast packet is treated as a broadcast packet, the transmission control unit 146 selects, from among the ports 132 other than the port 132 that has received the packet, a port or ports 132 to which another device or other devices are connected and whose transmission band is higher than or equal to the transmission threshold value, as a port or ports from which the packet is transmitted.

The transmission control unit 146 copies the multicast packet which is to be transmitted next and which is stored in the buffer 144, and performs processing for transmitting a copy from a port 132 with respect to every selected port 132. After transmission of a copy of the multicast packet from every selected port 132 is finished, the transmission control unit 146 deletes the multicast packet whose copy or copies have been transmitted, from the buffer 144.

Here, the transmission threshold value is set to, for example, a value equal to the reception band measured by the reception-band measurement unit 143, a value such as the reception band + α or the reception band x β, or the like. Here, for example, α is a value arbitrarily set by a user and may be a negative value. Moreover, for example, β is a value arbitrarily set by a user and may be a value less than one.

Thereafter, the procedure returns to step S3, and subsequent processing is performed.

On the other hand, in step S5, if it is determined that a packet to be transmitted next is not a multicast packet, the procedure proceeds to step S7.

In step S7, the transmission control unit 146 transmits a packet to a destination set in the packet. More specifically, for example, in a case where a packet to be transmitted next is a unicast packet, the transmission control unit 146 copies the packet which is to be transmitted next and which is stored in the buffer 142, and transmits a packet, which is a copy of the packet, from the port 132 to which the terminal device 113 having the MAC address that matches the destination MAC address of the packet is directly or indirectly connected. After transmission of the packet is finished, the transmission control unit 146 deletes the packet whose copy has been transmitted, from the buffer 142.

Moreover, for example, in a case where a packet to be transmitted next is a broadcast packet, the transmission control unit 146 copies the packet which is to be transmitted next and which is stored in the buffer 142, and performs processing for transmitting a copy from a port 132 with respect to every port 132 to which another device is connected, from among the ports 132 other than the port 132 that has received the packet. After transmission of a copy or copies of the packet is completely finished, the transmission control unit 146 deletes the packet whose copy or copies have been transmitted, from the buffer 142.

Thereafter, the procedure returns to step S3, and subsequent processing is performed.

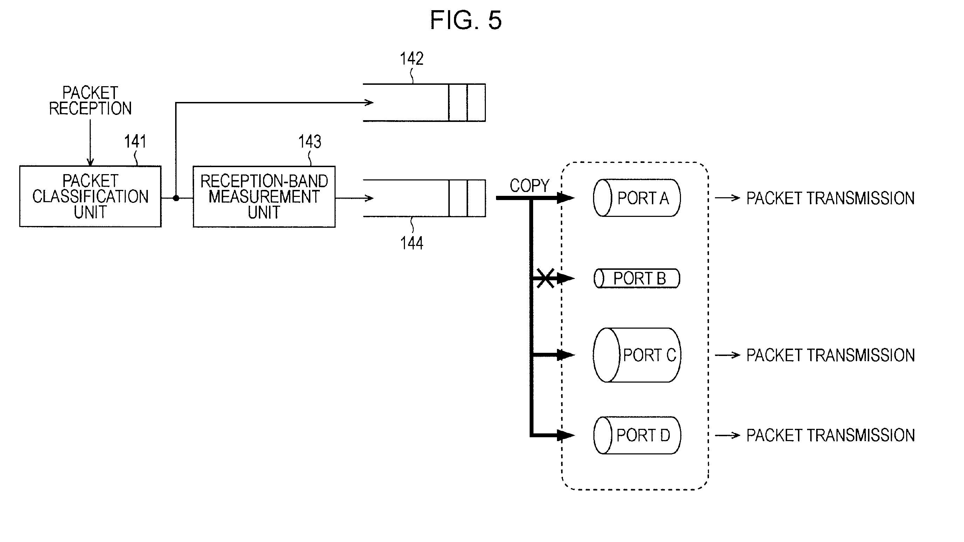

Thus, for example, as shown in Fig. 5, in a case where a multicast packet stored in the buffer 144 is transmitted via the ports A through D whose transmission band is different from each other, when the transmission band of the port B is less than the transmission threshold value corresponding to the reception band measured by the reception-band measurement unit 143, the network connected to the port B is removed from a multicast leaf and packets are transmitted only from the ports A, C, and D.

Thus, the occurrence of congestion of packets within the broadband router 111 or the Layer 2 switch 112 is suppressed, the congestion of packets being caused by a decrease in transfer speed of multicast packets due to a bottleneck port 132 whose transmission band is narrow. As a result, the occurrence of congestion of packets in the entire network system 101 is suppressed. Moreover, since a decrease in transfer speed of multicast packets is suppressed, the capacity of the buffer 144 can be smaller and a delay time occurring because of packet transfer can be shortened.

Here, in the description above, exemplary processing in a case where packets are relayed on the basis of a Layer 2 protocol has been described; however, the present invention is not limited to a specific protocol and can be applied to processing for relaying packets on the basis of a protocol having specifications for multicasting packets.

Moreover, in the description above, an example in which the reception band of only a stream of multicast packets has been described; however, the reception band of a stream of packets other than multicast packets may be measured.

Furthermore, in a case where packets are broadcasted, similarly, it is possible not to transmit broadcast packets from the port or ports 132 whose transmission band is less than the transmission threshold value.

The above-described series of processes may be executed by hardware or may be executed by software. In a case where the series of processes is executed by software, a program constituting the software is installed from a program recording medium onto, for example, a general-purpose personal computer capable of executing various functions with various programs being installed, a computer built in dedicated hardware, or the like.

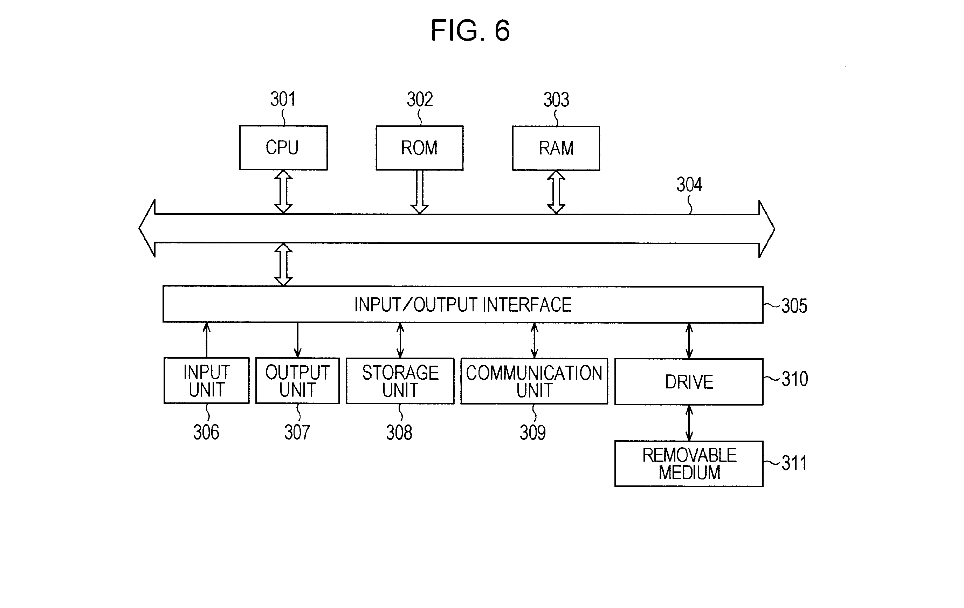

Fig. 6 is a block diagram showing an exemplary hardware structure of a computer that executes the above-described series of processes using a program.

In the computer, a CPU (Central Processing Unit) 301, a ROM (Read Only Memory) 302, and a RAM (Random Access Memory) 303 are connected to each other via a bus 304.

Furthermore, to the bus 304, an input/output interface 305 is connected. To the input/output interface 305, an input unit 306 including a keyboard, a mouse, a microphone, and the like, an output unit 307 including a display, a speaker, and the like, a storage unit 308 including a hard disk, a nonvolatile memory, and the like, a communication unit 309 including a network interface and the like, and a drive 310 that drives a removable medium 311 such as a magnetic disk, an optical disc, a magneto-optical disk, a semiconductor memory, or the like are connected.

In the computer having the structure as described above, the CPU 301 loads, for example, a program stored in the storage unit 308 into the RAM 303 via the input/output interface 305 and the bus 304, and the above-described series of processes is performed.

The program executed by the computer (the CPU 301) is provided from the removable medium 311 on which the program is recorded and which is a package medium including, for example, a magnetic disk (including a flexible disk), an optical disc (a CD-ROM (Compact Disc-Read Only Memory), a DVD (Digital Versatile Disc), or the like), a magneto-optical disk, a semiconductor memory, or the like. Alternatively, the program may be provided via a wired or wireless transmission medium such as a local area network, the Internet, or Digital Satellite Broadcasting.

Then, the program may be installed onto the storage unit 308 via the input/output interface 305 by inserting the removable medium 311 into the drive 310. Moreover, the program may be received by the communication unit 309 via a wired or wireless transmission medium and installed onto the storage unit 308. Alternatively, the program may be installed in advance on the ROM 302 or the storage unit 308.

Here, the program executed by the computer may be a program whose processes are performed in time series in accordance with the order described in this specification, or a program whose processes are performed in parallel or at necessary timings such as when the processes are called or the like.

Here, in this specification, the term system means the entire equipment including a plurality of devices, means, and the like.

Here, the embodiments of the present invention are not limited to the above-described embodiments, and a variety of modifications can be made without departing from the scope of the gist of the present invention.

## Claims

1. A relay device that relays a packet, the relay device comprising:
measurement means for measuring a reception band of a stream of received packets; and
transmission control means for controlling transmission of packets so as not to transmit the received packets from a port whose transmission band is lower than a threshold value corresponding to the reception band in a case where the received packets are multicast packets.

2. The relay device according to Claim 1, further comprising
classification means for classifying the received packets into multicast packets and packets which are not multicast packets, and
wherein the measurement means measures only the reception band of a stream of multicast packets.

3. The relay device according to Claim 1,
wherein a packet is relayed on the basis of a Layer 2 protocol.

4. A relay method for a relay device that relays a packet, comprising the steps of:
measuring a reception band of a stream of received packets; and
controlling transmission of packets so as not to transmit the received packets from a port whose transmission band is lower than a threshold value corresponding to the reception band in a case where the received packets are multicast packets.

5. A program for causing a computer to execute relay processing for relaying a packet, the processing comprising the steps of:
measuring a reception band of a stream of received packets; and
controlling transmission of packets so as not to transmit the received packets from a port whose transmission band is lower than a threshold value corresponding to the reception band in a case where the received packets are multicast packets.
